# EUROPÄISCHE PATENTSCHRIFT

(11) **EP 1 641 860 B1**
(45) Veröffentlichungstag und Bekanntmachung des Hinweises auf die Patenterteilung: **02.11.2011**
(21) Anmeldenummer: 04739943.1
(22) Anmeldetag: 16.06.2004
(51) Int. Cl.: C08G 18/80, C08G 18/79, C08G 18/08, C09D 175/06

(54) **BLOCKIERTE POLYISOCYANATE**
BLOCKED POLYISOCYANATES
POLYISOCYANATES BLOQUES

(30) Priorität: 27.06.2003 DE 10328994
(43) Veröffentlichungstag der Anmeldung: 05.04.2006
(73) Patentinhaber: Bayer MaterialScience AG, 51368 Leverkusen (DE)
(72) Erfinder: MAZANEK, Jan, 51061 Köln (DE); THIEBES, Christoph, 50670 Köln (DE); MEIXNER, Jürgen, 47803 Krefeld (DE); FLECK, Olaf, 51467 Bergisch Gladbach (DE); MÜLLER, Heino, 51375 Leverkusen (DE)
(86) Internationale Anmeldenummer: PCT/EP2004/006476
(87) Internationale Veröffentlichungsnummer: WO 2005/000937

(56) Entgegenhaltungen:
- EP-A- 0 096 210
- EP-A- 0 247 443
- WO-A-03/006524
- DE-A- 2 507 682

## Beschreibung

Die Erfindung betrifft neue blockierte Polyisocyanate und selbstvernetzenden Einkomponenten-Einbrennsysteme und Ihre Verwendung zur Herstellung von zur Herstellung von Lacken, Farben, Klebstoffen und Elastomeren.

Der Einsatz von Blockierungsmitteln zum temporären Schutz von Isocyanatgruppen ist seit langem bekannt. Blockierte Polyisocyanate werden unter anderem zur Herstellung von bei Raumtemperatur lagerstabilen, in der Hitze härtbaren 1K-PUR-Einbrennsystemen eingesetzt. Die blockierten Polyisocyanate werden dabei z.B. mit Hydroxylgruppen enthaltenden Polyestern, Polyacrylaten, anderen Polymeren sowie weiteren Bestandteilen von Lacken und Farben wie Pigmenten, Colösem oder Additiven vermischt. Eine andere Form bei Raumtemperatur lagerstabiler Einbrennlacke sind selbstvernetzende Einkomponenten-Einbrennsysteme, die als Bindemittel Polymere enthalten, die in einem Molekül sowohl blockierte Isocyanate als auch Hydroxylgruppen enthalten.

Übersichten über den Einsatz von blockierten Polyisocyanaten finden sich beispielsweise in Wicks, Z. Progress in Organic Coatings 3 (1975) 73-99, Wicks, Z. Progress in Organic Coatings 9 (1981) 3-28 , D. A. Wicks and Z. W. Wicks, Progress in Organic Coatings, (1999), 148-172.

Die wichtigsten Verbindungen, die zur Blockierung von Polyisocyanaten eingesetzt werden, sind ε-Caprolactam, Methyl-ethyl-ketoxim (Butanonoxim), Malonsäurediethylester, sekundäre Amine sowie Triazol- und Pyrazolderivate, so wie sie z.B. in EP-A 0 576 952, EP-A 0 566 953, EP-A 0 159 117, US-A 4 482 721, WO 97/12924 oder EP-A 0 744 423 beschrieben sind.

Sekundäre Amine werden als Blockierungsmittel in der EP-A 0 096 210 beschrieben. Dort werden allerdings lediglich Alkyl-, Cycloalkyl- und Aralkylgruppen enthaltende Amine als Blockierungsmittel ausdrücklich genannt. Amine, die funktionelle Gruppen mit Kohlenstoff-Heteroatom-Mehrfachbindungen oder Heteroatom-Heteroatom-Mehrfachbindungen enthalten, werden dort nicht explizit erwähnt.

Die am häufigsten eingesetzten Blockierungsmittel für Isocyanate sind ε-Caprolactam und Butanonoxim. Während bei ε-Caprolactam in der Regel Einbrenntemperaturen um 160°C angewandt werden, können blockierte 1K-Einbrennlacke, bei denen Butanonoxim als Blockierungsmittel eingesetzt wurde, schon bei 10 bis 20°C niedrigeren Temperaturen eingebrannt werden. Allerdings werden bei diesen Einbrenntemperaturen in manchen Lacksystemen die gewünschten Lackeigenschaften nicht mehr erreicht. Aber auch diese Temperaturen werden einstweilen als zu hoch empfunden, so dass der Bedarf nach Einbrennsystemen entstanden ist, die bei niedrigeren Temperaturen voll-Vernetzer enthalten.

Der vorliegenden Erfindung lag daher die Aufgabe zugrunde, blockierte Polyisocyanate bereitzustellen, die eine niedrigere Vernetzungs- bzw. Einbrenntemperatur aufweisen als Butanonoximblockierte Polyisocyanate.

Diese Aufgabe wurde mit dem erfindungsgemäßen, blockierten Polyisocyanaten und diese enthaltenden selbstvernetzenden Einkomponenten-Einbrennsystemen gelöst.

Gegenstand der vorliegenden Erfindung sind blockierte Polyisocyanate und selbstvernetzende 1K-Einbrennsysteme auf Polyurethanbasis der Formel (I) 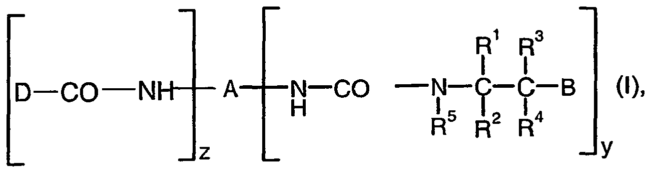 worin
- A: den Rest eines Polyisocyanats bedeutet,
- B: für 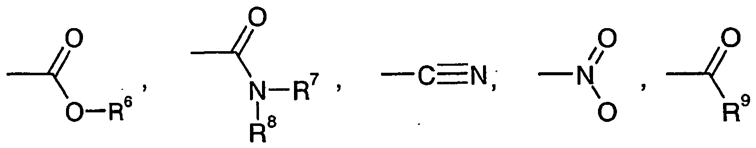 steht, wobei R⁶-R⁸ gleich oder verschieden sein können und unabhängig voneinander C₁-C₆-Alkyl und/oder C₁-C₆-Cycloalkyl bedeuten, R⁹ Wasserstoff oder C₃-C₆-Alkyl oder C₃-C₆-Cycloalkyl bedeutet,
- D: den Rest eines kationischen, anionischen und/oder nichtionischen Hydrophilierungsmittels bedeutet,
- R¹-R⁴: gleich oder verschieden sein können und unabhängig voneinander Wasserstoff, C₁-C₆-Alkyl oder C₃-C₆-Cycloalkyl bedeuten,
- R⁵: C₁-C₁₀-Alkyl, C₃-C₁₀-Cycloalkyl bedeutet,
- y: eine Zahl von 1 bis 8 bedeutet und
- z: eine Zahl von 0,1 bis 4, bevorzugt 0,2 bis 2 bedeutet,
wobei das Verhältnis von y zu z 20:1 bis 1:1 , bevorzugt 10:3 bis 3:1, besonders bevorzugt 8:1 bis 4:1, beträgt.

Gegenstand der Erfindung ist auch ein Verfahren zur Herstellung der blockierten Polyisocyanate der Formel (I) dadurch gekennzeichnet, dass Polyisocyanate mit der allgemeinen Formel (II), 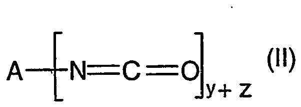 worin A, y und z die unter Formel I angegebene Bedeutung haben,
mit sekundären Aminen der allgemeinen Formel (III), 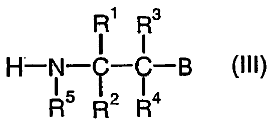 worin R¹-R⁵ und B die bei Formel (I) genannte Bedeutung haben, und Hydrophilierungsmitteln D-H umgesetzt werden.

Ein weiterer Gegenstand der Erfindung ist die Verwendung von erfindungsgemäßen blockierten Polyisocyanate zur Herstellung von Lacken, Farben und anderen Einbrennsystemen wie z.B. Klebstoffen oder Elastomeren sowie als Zusatz bei der Vulkanisation von Kautschuken, ferner Gegenstände aus diesen Materialien und mit diesen beschichtete Substrate.

Die Blockierungsmittel der Formel (III) lassen sich beispielsweise durch Reaktion von primären Aminen an Verbindungen mit aktivierten Kohlenstoff-Kohlenstoff-Doppelbindungen wie sie beispielsweise in Organikum, 19. Auflage, Deutscher Verlag der Wissenschaften, Leipzig, 1993, Seiten 523 bis 525 beschrieben sind, herstellen. Dabei reagiert ein primäres Amin selektiv mit einer Kohlenstoff-Kohlenstoff-Doppelbindung zu einem sekundären, unsymmetrischen Amin. Bevorzugt verwendet man als Blockierungsmittel der Formel (III) Stoffe, die sich als Reaktionsprodukte im oben beschriebenen Sinne von sterisch gehinderten primären Alkylaminen, wie beispielsweise sec-Butylamin, tert-Butylamin, ggf. alkylsubstituiertes Cyclohexylamin, iso-Propylamin, Cyclopropylamin, den verzweigten oder cyclischen Isomeren des Pentyl-, Hexyl-, Heptyl-, Octyl- und Nonylamins, Benzylamin und Verbindungen mit einer aktivierten Kohlenstoff-Kohlenstoff-Doppelbindung, wie beispielsweise α,β-ungesättigten Carbonsäureestern, α,β-ungesättigten N,N-Carbonsäuredialkylamiden, Nitroalkenen, Aldehyden und Ketonen auffassen lassen. Besonders bevorzugt verwendet man Stoffe, die sich als Additionsprodukte von primären Aminen an Alkylester der Acryl-, Methacryl- und Crotonsäure, wie Methylmethacrylat, iso-Norbomylmethacrylat Ethylmethacrylat, n-Propylmethacrylat, iso-Propylmethacrylat, n-Butylmethacrylat, iso-Butylmethacrylat, 2-Ethylhexylmethacrylat, Methylacrylat, Ethylacrylat n-Propylacrylat, isoPropylacrylat, iso-Norbomylacrylat, n-Butylacrylat, tert.-Butylacrylat, iso-Butylacrylat, 2-Ethylhexylacrylat, Crotonsäuremethylester, Crotonsäureethylester, Crotonsäurepropylester auffassen lassen.

Bevorzugt werden Stoffe verwendet, die sich als das Additionsprodukt von tert.-Butylamin, Diisopropylamin und/oder Cyclohexylamin an Alkylacrylate oder Alkylmethacrylate auffassen lassen. Besonders bevorzugt sind Produkte, die sich durch Addition von tert.-Butylamin an Methylmethacrylat oder an tert.-Butylester der Acryl- oder Methacrylsäure herstellen lassen.

Die Herstellung der Blockierungsmittel in kann in einem geeigneten, vorzugsweise polaren, Lösemittel geschehen. Gegebenenfalls lassen sich die gewünschten Produkte destillativ oder durch Extraktion von dem Lösemittel und/oder Nebenprodukten trennen, und anschließend mit den Polyisocyanaten umsetzen. Es ist aber auch möglich, die Reaktion in einem geeigneten Lacklösemittel durchzuführen und die erhaltene Reaktionsmischung direkt zur Herstellung der blockierten Polyisocyanate zu verwenden.

Selbstverständlich können auch Blockierungsmittel der Formel (III) verwendet werden, die auf einem anderen als dem oben beschriebenen Weg, beispielsweise durch Umesterung eines Ethylesters der Formel (III) in einen Methylester, hergestellt wurden.

Selbstverständlich können Blockierungsmittel der Formel (III) in beliebigen Gemischen untereinander verwendet werden. Ebenso ist es möglich, die erfindungsgemäßen Blockierungsmittel in beliebigen Gemischen mit anderen oben beschriebenen Blockierungsmitteln des Stands der Technik einzusetzen.

Als Polyisocyanate im Sinne der Erfindung können alle bekannten aliphatischen, cycloaliphatischen und aromatischen Diisocyanaten basierenden Polyisocyanate mit einem Isocyanatgehalt von 0,5 bis 50, bevorzugt 3 bis 30, besonders bevorzugt 5 bis 25 Gew.-%, eingesetzt werden, z.B. solche auf Basis von 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondüsocyanat, IPDI), 4,4'-Diisocyanatodicyclohexylmethan, 1-Isocyanato-1-methyl-4(3)iso-cyanato-methylcyclohexan (IMCI), Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), Diphenylmethan-2,4'-und/oder 4,4'-diisocyanat (MDI) sowie kernhydrierte Produkte, 1,5-Diisocyanatonaphthalin, 2,4'-, 4,4'-Diisocyanatodiphenylmethan.

Bevorzugt geeignet sind Polyisocyanate, die Heteroatome in dem die Isocyanatgruppen enthaltenden Rest enthalten. Beispiele hierfür sind Carbodiimidgruppen, Allophanatgruppen, Isocyanuratgruppen, Iminooxadiazintriongruppen, Urethangruppen und Biuretgruppen aufweisende Polyisocyanate. Besonders gut sind erfindungsgemäß die bekannten Polyisocyanate, die hauptsächlich bei der Herstellung von Lacken verwendet werden einsetzbar, z.B. Allophanat-, und/oder Biuret-, und/oder Isocyanurat-, Uretdiongruppen und/oder Iminooxadiazintriongruppen, aufweisende Modifizierungsprodukte der oben genannten einfachen Diisocyanate, insbesondere des Hexamethylendiisocyanats oder des Isophorondiisocyanats, 2,4' und 4,4'-Diisocyanatodicyclohexylmethan. Weiterhin geeignet sind niedermolekulare, Urethangruppen enthaltende Polyisocyanate, wie sie durch Umsetzung von im Überschuss eingesetztem IPDI, MDI oder TDI mit einfachen mehrwertigen Alkoholen des Molekulargewichtsbereiches 62 bis 300, insbesondere mit Trimethylolpropan oder Glycerin, erhalten werden können.

Besonders bevorzugt sind Polyisocyanate mit Isocyanurat-, Iminooxadiazindion- oder Biuretstruktur auf Basis von Hexamethylendiisocyanat (HDI), Isophorondiisocyanat (IPDI) und/oder 4,4'-Diisocyanatodicyclohexylmethan oder Gemische dieser Verbindungen.

Geeignete Polyisocyanate sind ferner die bekannten, endständige Isocyanatgruppen aufweisenden Prepolymere, wie sie insbesondere durch Umsetzung der oben genannten einfachen Polyisocyanate, vorzugsweise Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanatgruppen zu gegenüber NCO-reaktiven Wasserstoffatomen 1,05:1 bis 20:1, vorzugsweise 1,3:1 bis 3:1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden vorzugsweise so gewählt, dass die NCO-Prepolymeren vorzugsweise eine mittlere NCO-Funktionalität von 2 bis 3 und ein Zahlenmittel der Molmasse von 500 bis 10000, vorzugsweise. 800 bis 4000 aufweisen. Es ist möglich, nach Herstellung der Prepolymere nicht umgesetztes Polyisocyanat, vorzugsweise destillativ, zu entfernen.

Selbstverständlich können die genannten Polyisocyanate auch als Gemische untereinander eingesetzt werden.

Weiterhin sind als Polyisocyanate im Sinne der Erfmdung solche freie Isocyanatgruppen enthaltenden Polymere auf Polyurethan-, Polyester- und/oder Polyacrylat-Basis sowie gegebenenfalls deren Gemische geeignet, bei denen nur ein Teil der freien Isocyanatgruppen mit den erfindungsgemäßen Blockierungsmitteln umgesetzt wird, während der restliche Teil mit einem Überschuss an Hydroxylgruppen enthaltenden Polyestern, Polyurethanen und/oder Polyacrylaten sowie gegebenenfalls deren Gemische umgesetzt wird, so dass ein freie Hydroxygruppen enthaltendes Polymer entsteht, das beim Erhitzen auf geeignete Einbrenntemperaturen ohne Zugabe weiterer mit Isocyanatgruppen reaktionsfähigen Gruppen vernetzt (selbstvemetzende Einkomponenten-Einbrennsysteme).

Die Herstellung der erfindungsgemäßen blockierten Polyisocyanate kann nach an sich bekannten Methoden erfolgen. Beispielsweise können ein oder mehrere Polyisocyanate vorgelegt und das Blockierungsmittel (beispielsweise während etwa 10 Min.) unter Rühren zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren Blockierungsmitteln zu blockieren.

Selbstverständlich ist auch eine Herstellung in gegebenenfalls wassermischbaren Lösungsmitteln möglich, die gegebenenfalls nach der Herstellung wieder entfernt werden. Es ist aber auch möglich, die erfmdungsgemäßen Polyisocyanate in mit Wasser nicht mischbaren Lösungsmitteln herzustellen, und diese Gemische anschließend in Wasser zu dispergieren bzw. sie mit wassermischbaren Lösungsmitteln wie Aceton oder N-Methylpyrrolidon zu wassermischbaren Lösungen zu verdünnen. Bei der Herstellung der erfindungsgemäßen Polyisocyanate können auch Katalysatoren, Colöser und andere Hilfsmittel und Additive verwendet werden.

Es ist weiterhin möglich, freie NCO-Gruppen von Diisocyanaten nur teilweise mit den erfindungsgemäßen Blockierungsmitteln umzusetzen und anschließend einen Teil der nichtblockierten NCO-Gruppen unter Bildung von aus mindestens zwei Diisocyanaten aufgebauten Polyisocyanaten abzureagieren.

Ein wesentlicher Bestandteil der Herstellung der erfindungsgemäßen blockierten Polyisocyanate ist deren Hydrophilierung, die dazu führt, dass die so hergestellten Polyisocyanate nach Zugabe von Wasser in Lösung bleiben oder aber feinteilige, sedimentationsstabile Dispersionen bilden.

Als Hydrophilierungsmittel können dabei alle für diese Zweck geeigneten kationischen, anionischen und/oder nichtionischen Verbindungen eingesetzt werden wie Mono- und/oder Dihydroxycarbonsäuren oder monofunktionelle Alkylethoxilate. Es können auch Gemische verschiedener Hydrophilierungsmittel eingesetzt werden.

Der Einbau der Hydrophilierungsmittel in die erfindungsgemäßen Polyisocyanate kann nach an sich bekanntem Verfahren erfolgen. So kann z.B. zuerst ein Teil der Isocyanatgruppen mit den erfindungsgemäßen Blockierungsmitteln und anschließend der Rest mit dem Hydrophilierungsmittel umgesetzt werden. Es kann aber auch umgekehrt verfahren werden oder aber so, dass die Blockierung der Isocyanatgruppen in zwei Schritten, nämlich vor und nach der Hydrophilierung erfolgt.

Selbstverständlich können die Hydrophilierungsmittel auch zu einem anderen Zeitpunkt der Herstellung der erfindungsgemäßen Polyisocyanate zugegeben werden, wie z.B. bei der Herstellung der Prepolymere. Als Hydrophilierungsmittel können außerdem auch hydrophilierte Polyether, Polyester und/oder Polyacrylate eingesetzt werden, so wie sie z.B. bei der Herstellung von selbstvernetzenden Einkomponenten-Einbrennlacken verwendet werden. Es können auch Gemische aus hydrophilierten und nicht hydrophilierten Polyisocyanaten eingesetzt werden.

Werden zur Hydrophilierung Mono- oder Dihydroxycarbonsäuren eingesetzt, so erfolgt anschließend eine volle oder teilweise Neutralisation der Carboxylgruppen. Die Neutralisation kann mit beliebigen Aminen erfolgen wie Triethyl-, Dimethylcyclohexyl-, Mehthyldüsopropyl- oder Dimethylethanolamin. Auch Ammoniak ist geeignet.

Die erfindungsgemäßen blockierten Polyisocyanate werden als hydrophilierte wässrige und/oder wasserverdünnbare blockierten Polyisocyanate als Vernetzer vorzugsweise in einer Zusammensetzung entsprechend
a) 100 Äquivalent-% Polyisocyanat (II)
b) 40-90, bevorzugt 60-85 Äquivalent-% erfindungsgemäßes Blockierungsmittel (III)
c) 10-40, bevorzugt 10-30, besonders bevorzugt 10-25 Äquivalent-% eines Hydrophilierungsmittels D und gegebenenfalls
d) 0-40, bevorzugt 5-25 Äquivalent-% einer bevorzugt difunktionellen Hydroxyl- und/oder Aminogruppen enthaltenden Verbindung eines mittleren Molgewichts von 62 bis 3000, bevorzugt 62-1500,

wobei die Mengenverhältnisse der Reaktionspartner so gewählt werden, dass das Äquivalentverhältnis von NCO-Gruppen der Komponente a) zu gegenüber Isocyanaten reaktionsfähigen Gruppen der Komponenten b), c) und d) bei 1:0,8 bis 1:1,2 liegt, sowie gegebenenfalls Zuschlagstoffen und Hilfsstoffen,
verwendet.

Als difunktionelle Kettenverlängerungskomponente c) kommen beispielsweise Diamine, Diole und auch Hydroxyamine im Molekulargewichtsbereich von 32 bis 300 in Betracht. Beispiele sind Hydrazin, Ethylendiamin, Isophorondiamin, das Bisketimin aus Isophorondiamin und Methylisobutylketon, 1,4-Dihydroxy-butan, 1,6-Hexandiol, Ethanolamin, N-Methylethanolamin, Hydroxyethylethylendiamin, das Addukt von 2 Mol Propylencarbonat und 1 mol Hydrazin der Formel (III) in Frage.

Die wässrigen und/oder wasserverdünnbaren blockierten Polyisocyanate liegen entweder als Lö- 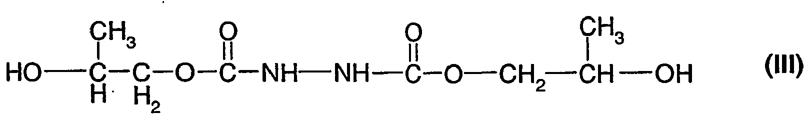 sungen in vorzugsweise wassermischbaren Lösungsmitteln wie N-Methylpyrrolidon mit einer Konzentration von 40-95, vorzugsweise 60-85 Gew.-% vor oder aber als feinteilige Dispersionen mit einem Feststoffgehalt von 25-70, vorzugsweise 35-50 Gew.-%.

Die erfindungsgemäßen blockierten Polyisocyanate werden zur Herstellung von Bindemitteln für Lacke, Farben und andere Einbrennsysteme wie Klebstoffe und Elastomere verwendet und als Vernetzer (Komponente) für Polyolkomponenten. Diese können zur Beschichtung von Substraten aus beliebigen Materialien, wie z.B. Metalle, Holz, mineralische Stoffe, Betonprodukte, Kunststoffe, Textilien, Glas eingesetzt werden.

Die erfindungsgemäßen Polyisocyanate sind, wie oben beschrieben, selbstvernetzende Polymere und/oder können auch als Vernetzer für Polyolkomponenten verwendet werden. Als Polyolkomponenten, die auch als Gemische eingesetzt werden können, kommen Polyhydroxypolyester, Polyhydroxypolyether oder Hydroxylgruppen aufweisende Polymerisate, z.B. die an sich bekannten Polyhydroxypolyacrylate mit einer Hydroxylzahl von 20 bis 200, vorzugsweise 50 bis 130, bezogen auf 100%ige Produkte oder Polyhydroxypolycarbonate oder Polyhydroxypolyurethane, in Betracht.

Bei den Polyhydroxylpolyacrylaten handelt es sich um an sich bekannte Mischpolymerisate von Styrol mit einfachen Estern der Acrylsäure und/oder Methacrylsäure, wobei zwecks Beinführung der Hydroxylgruppen Hydroxyalkylester, wie beispielsweise die 2-Hydroxyethyl-, 2-Hydroxypropyl-, 2-, 3- oder 4-Hydroxybutylester dieser Säuren mitverwendet werden.

Geeignete Polyetherpolyole sind die aus der Polyurethanchemie an sich bekannten Ethoxylierungs- und/oder Propoxylierungsprodukte geeigneter 2- bis 4-wertiger Startermoleküle wie z.B. Wasser, Ethylenglykol, Propandiol. Tri-methylolpropan, Glycerin und/oder Pentaerythrit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der beispielhaft genannten Art mit überschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können auch beliebige Gemische der beispielhaft genannten mehrwertigen Alkohole oder beliebige Gemische der beispielhaft genannten Säuren bzw. Säureanhydride eingesetzt werden.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Die gegebenenfalls erforderliche hydrophile Modifizierung dieser Polyhydroxylverbindungen erfolgt nach an sich bekannten Methoden, wie sie beispielsweise in EP-A-0 157 291 oder EP-A-0 427 028 beschrieben sind.

Selbstverständlich können auch Gemische oder aber Reaktionsprodukte auf der Basis von Polyestern, Polyethern und Polyacrylaten, gegebenenfalls auch modifiziert durch Polyurethane der bekannten Art, eingesetzt werden.

Die Herstellung der Lacke, Farben und anderen Formulierungen unter Verwendung der erfmdungsgemäßen Polyisocyanate erfolgt nach an sich bekannten Methoden. Außer den Polyisocyanaten und Polyolen können den Formulierungen übliche Additive und andere Hilfsstoffe (z.B. Lösemittel, Pigmente, Füllstoffe, Verlaufsmittel, Entschäumer, Katalysatoren) in durch den Fachmann leicht zu ermittelnden Mengen zugesetzt werden.

Es können ebenfalls weitere, mit NCO- reaktiven Gruppen reaktive Verbindungen als zusätzliche Vernetzerkomponente eingesetzt werden. Beispielsweise sind dies Aminoplastharze. Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten Melamin-Formaldehyd-Kondensate. Im Falle der Mitverwendung anderer Vernetzerkomponenten muss die Menge an Bindemittel mit NCO-reaktiven Hydroxylgruppen entsprechend angepasst werden.

Die erfindungsgemäßen blockierten Polyisocyanate können zur Herstellung von Einbrennlacken, z.B. für die Industrielackierung und bei der Automobilerstlackierung verwendet werden. Hierzu können die erfindungsgemäßen Überzugsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann dabei beispielsweise bei 10 bis 120 µm liegen. Das Aushärten der getrockneten Filme erfolgt durch Einbrennen in Temperaturbereichen von 90 bis 160°C, bevorzugt 110 bis 140°C, besonders bevorzugt bei 120 bis 130°C. Die erfindungsgemäßen blockierten Polyisocyanate können zur Herstellung von Einbrennlacken für die kontinuierliche Bandbeschichtung eingesetzt werden, wobei maximale Einbrenntemperaturen, dem Fachmann (bei der Beschichtung von Metallen) als Peak (Metal) Temperaturen bekannt, zwischen 130 und 300 °C, bevorzugt 190 bis 260°C, und Trockenfilm-Schichtdicken von beispielsweise 3 bis 40 µm erreicht werden können.

Nachfolgende Beispiele erläutern näher die Erfindung, ohne sie jedoch einzuschränken.

### Beispiele:

Bei Prozentangaben handelt es sich um Gewichtsprozent, solange nichts anderes angegeben wird. Bei Festkörpergehalt und BNCO-Gehalt handelt es sich um berechnete Größen, die folgendermaßen berechnet werden:
Festkörpergehalt in % = [(Gesamtgewicht-Gesamtgewicht der Lösemittel) dividiert durch Gesamtgewicht] multipliziert mit 100
BNCO-Gehalt in % = [(val blockierter NCO-Gruppen multipliziert mit 42) dividiert durch Gesamtgewicht] multipliziert mit 100

Partikelgrößen wurden mit Laser-Korrelationsspektroskopie (LKS) ermittelt.

### Beispiel 1: Bloclderungsmittel B1

Zu 73,14 g tert-Butylamin gelöst in 160,0 g Methanol wurden unter Rühren bei Raumtemperatur 86,09 g Methylacrylat zugegeben und die entstandene klare Lösung für weitere 16 h bei Raumtemperatur gerührt. Man destillierte das Lösungsmittel ab und erhielt 158,1 g eines Produktes der Formel 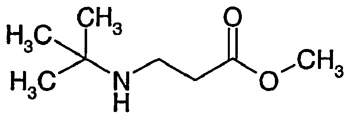 in einer für die weitere Umsetzung zum blockierten Polyisocyanat ausreichenden Reinheit.

### Beispiel 2: Blockierungsmittel B2

Zu 95,09 g tert-Butylamin gelöst in 175,0 g Ethanol wurden unter Rühren bei Raumtemperatur 100,1 g Methylmethacrylat zugegeben und die entstandene klare Lösung für weitere 72 h bei 70°C gerührt. Man destillierte die leichtflüchtigen Bestandteile ab, filtrierte und erhielt als Filtrat 165,7 g eines Produktes der Formel 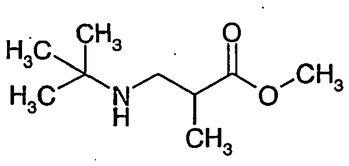 in einer für die weitere Umsetzung zum blockierten Polyisocyanat ausreichenden Reinheit.

### Beispiel 3: Blockierungsmittel B3

Zu 73,14 g tert-Butylamin gelöst in 200,0 g Methanol wurden unter Rühren bei Raumtemperatur 128,1 g tert.-Butylacrylat zugegeben und die entstandene klare Lösung für weitere 16 h bei Raumtemperatur gerührt. Man destillierte das Lösungsmittel ab und erhielt 199,1 g eines Produktes der Formel 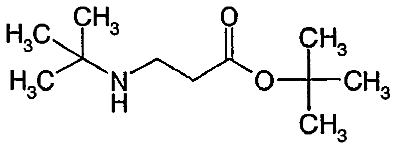 in einer für die weitere Umsetzung zum blockierten Polyisocyanat ausreichenden Reinheit.

### Beispiel 4: Blockierungsmittel B4

Zu 99,18 g Cyclohexylamin gelöst in 185,0 g Methanol wurden unter Rühren bei Raumtemperatur 86,09 g Methylacrylat zugegeben und die entstandene klare Lösung für weitere 16 h bei Raumtemperatur gerührt. Man destilliert das Lösungsmittel ab und erhielt 184,2 g eines Produktes der Formel 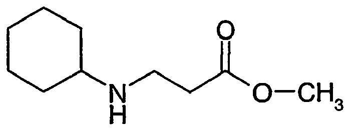 in einer für die weitere Umsetzung zum blockierten Polyisocyanat ausreichenden Reinheit.

### Beispiel 5: Blockierungsmittel B5

Zu 59,0 g Isopropylamin gelöst in 135,0 g Methanol wurden unter Rühren bei Raumtemperatur 100,1 g Methylmethacrylat zugegeben und die entstandene klare Lösung für weitere 12 h bei Raumtemperatur gerührt. Man destillierte das Lösungsmittel ab und erhielt 158,2 g eines Produktes der Formel 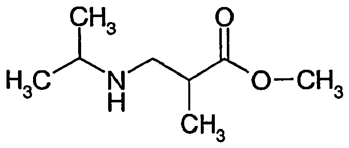 in einer für die weitere Umsetzung zum blockierten Polyisocyanat ausreichenden Reinheit.

### Beispiel 6: Blockierungsmittel B 6

Zu 73,14 g tert-Butylamin gelöst in 175,0 g Ethanol wurden unter Rühren bei Raumtemperatur 100,1 g Crotonsäuremethylester zugegeben und die entstandene klare Lösung für weitere 72 h bei 70°C gerührt. Man destillierte das Lösungsmittel ab und erhielt 168,9 g eines Produktes der Formel 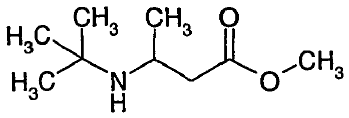 in einer für die weitere Umsetzung zum blockierten Polyisocyanat ausreichenden Reinheit.

### Beispiel 7

### (Herstellung eines wasserverdünnbaren Polyisocyanat-Vernetzers)

58,80 g (0,297 Val) eines handelsüblichen isocyanurathaltigen Lackpolyisocyanates auf Basis von 1,6-Diisocyanatohexan (HDI) mit einem NCO-Gehalt von 21,4 Gew.-%, einer Viskosität bei 23°C von ca. 3000mPas und einer Funktionalität von ca. 3,5, 7.08g (0,06 Mol) Hydroxypivalinsäure und 56,57 g N-Methylpyrrolidon wurden unter Rühren vermischt und innerhalb von 30 Minuten auf 70°C erwärmt. Bei dieser Temperatur wurde 2 Stunden gerührt und die Temperatur anschließend auf 80°C erhöht. Nach weiteren 2 Stunden wurde ein NCO-Gehalt von 7,60% erreicht, das Reaktionsgemisch auf 55°C abgekühlt und dann innerhalb von 15 Minuten 35,35 g (0,222 Mol) Verbindung aus Beispiel 1 zugegeben, wobei die Temperatur auf 55°C anstieg.

Es wurde 10 Minuten bei 55°C nachgerührt und die Vollständigkeit der Reaktion durch IR-Spektrum nachgewiesen. Anschließend wurden bei 50°C 5,35g (0,06 Mol) Dimethylethanolamin zugegeben und 10 Minuten nachgerührt. Es entstand eine klare Lösung des blockierten Polyisocyanats mit einem Feststoffgehalt von 66,6 % und mit einem Gehalt an blockierten NCO-Gruppen von 5,69%.

### Beispiel 8

### (Herstellung einer erfindungsgemäßen wässrigen Dispersion)

Zu 58,80 g(0,297 Val) eines handelsüblichen isocyanurathaltigen Lackpolyisocyanates auf Basis von 1,6-Diisocyanatohexan (HDI) mit einem NCO-Gehalt von 21,4 Gew.-%, einer Viskosität bei 23°C von ca. 3000 mPas und einer Funktionalität von ca. 3,5, wurden unter Rühren bei Raumtemperatur innerhalb von 20 Minuten 30,10 g (0,1879 Mol) Verbindung aus Beispiel 1 zugegeben.

Dabei stieg die Temperatur auf 50°C, der NCO-Gehalt des Reaktionsgemisches erreicht 5,06% (theoret. 5,07%). Das Reaktionsgemisch wurde auf 70°C unter Rühren aufgeheizt und dann wurden nacheinander innerhalb von insgesamt 30 Minuten 1,61 g (0,0135 Mol) 1,6-Hexandiol und 6,42 g(0,054 Mol) Hydroxypivalinsäure, letztere gelöst in 10,36 g N-Methylpyrrolidon, zugegeben. Es wurde weiter 2 Stunden bei 70°C gerührt, der NCO-Gehalt erreichte 0,2%. Dann wurden bei 70°C 5,34 g(0,0594 Mol) Dimethylethanolamin zugegeben und 15 Minuten nachgerührt. Anschließend wurden 143,84 g 70°C warmes entionisiertes Wasser zugegeben und 1 Stunden bei 70°C dispergiert. Es entstand eine stabile weiße Dispersion mit nachfolgenden Eigenschaften:

| | |
|---|---|
| Festkörpergehalt: | 40 % |
| pH-Wert: | 8,98 |
| Viskosität (23°C): | 10 mPas |
| Mittlere Partikelgröße (LKS): | 138 nm |

### Beispiel 9

### (Herstellung einer erfindungsgemäßen wässrigen Vemetzer-Dispersion)

343,20 g (1,76 Val) eines handelsüblichen isocyanurathaltigen Lackpolyisocyanates auf Basis von 1,6-Diisocyanatohexan (HDI) mit einem NCO-Gehalt von 21,4 Gew.-%, einer Viskosität bei 23°C von ca. 3000 mPas und einer Funktionalität von ca. 3,5, wurden auf 70°C unter Rühren aufgeheizt und 9,45 g (0,08 Mol) 1,6-Hexandiol innerhalb von 10 Minuten zugegeben. Danach wurde eine Lösung aus 37,76 g (0,32 Val) Hydroxypivalinsäure in 60,93 g N-Methylpyrrolidon innerhalb von 3 Stunden zugegeben und dann 1 Stunde bei 70°C nachgerührt. Der NCO-Gehalt des Reaktionsgemisches betrug dann 11,56 % (theoret. 11,91%). Anschließend wurde bei 70°C 198,73 g (1,25 Mol) Blockierungsmittel aus dem Beispiel 1 innerhalb von 30 Minuten zugegeben und 30 Minuten nachgerührt. IR-Spektroskopisch konnte dann kein NCO mehr gefunden werden. Innerhalb von 10 Minuten wurden bei 70°C 31,38 g (0,352 Mol) Dimethylethanolamin zugegeben, 10 Minuten nachgerührt und anschließend unter Rühren 869,9 g 70°C warmes entionisiertes Wasser zugegeben und 1 Stunde bei 70°C nachgerührt. Nach Abkühlen unter Rühren auf Raumtemperatur wurde eine Dispersion mit folgenden Eigenschaften erhalten:

| | |
|---|---|
| Festkörpergehalt: | 40 % |
| pH-Wert: | 8,04 |
| Viskosität (23°C): | 30 mPas |
| Mittlere Partikelgröße (LKS): | 69 nm |

### Beispiel 10

### (Herstellung einer erfindungsgemäßen Dispersion)

Es wurde wie im Beispiel 9 beschrieben gearbeitet, jedoch wurde als Polyisocyanat eine 70%ige Lösung des Trimerisats von Isophorondüsocyanat in Methoxypropylacetat/Xylol (Desmodur^{®} Z 4400 MIX, Bayer AG) verwendet. Die erhaltene Dispersion hatte nachfolgende Eigenschaften:

| | |
|---|---|
| Festkörpergehalt: | 40 % |
| pH-Wert: | 9,12 |
| Viskosität (23°C): | 60 mPas |
| Mittlere Partikelgröße (LKS): | 105 nm |

### Beispiel 11

78,00 g (0,4 Val) eines handelsüblichen isocyanurathaltigen Lackpolyisocyanates auf Basis von 1,6-Diisocyanatohexan (HDI) mit einem NCO-Gehalt von 21,4% Gew.-%, einer Viskosität bei 23°C von 3000 mPas und einer Funktionalität von ca. 3,5, wurden bei 70°C unter Rühren vorgelegt und eine Lösung aus 4,72 g (0,04 mol) Hydroxypivalinsäure und 1,34 g (0,01 Mol) Dimethylolpropionsäure in 11,17 g N-Methylpyrrolidon wurde innerhalb von 5 Minuten zugegeben. Nach Zugabe von 4,00 g (0,008 Mol) Pluriol 500 (Methyloligoethylenglykol, MG 500) und 1,18 g (0,02 Mol) 1,6-Hexandiol wurde 90 Minuten bei 70°C gerührt. Der NCO-Gehalt lag dann bei 12,98% (theoret. 13,05 %). Bei 70°C wurden 49,68 g (0,312 Mol) Verbindung aus Beispiel 1 innerhalb von 20 Minuten zugegeben und 15 Minuten bei 70°C nachgerührt. Es konnten dann keine NCO-Gruppen IR-Spektroskopisch nachgewiesen werden. Bei 70°C wurden 4,46 g (0,05 Mol) Dimethylethanolamin zugegeben, 10 Minuten nachgerührt und dann 205,79 g 50°C warmes Wasser zugegeben. Es wurde 1 Stunde bei 50°C nachgerührt. Die entstandene Dispersion hatte folgende Eigenschaften:

| | |
|---|---|
| Festkörpergehalt: | 40 % |
| pH-Wert: | 9,30 |
| Viskosität (23°C): | 1800 mPas |
| Mittlere Partikelgröße (LKS): | 73 nm |

### Beispiel 11 a

Es wurde wie im Beispiel 9 beschrieben gearbeitet, jedoch wurde anstelle der Verbindung aus Beispiel 1 die gleiche molare Menge der Verbindung aus Beispiel 5 eingesetzt. Die erhaltene Dispersion besaß nachfolgende Eigenschaften:

| | |
|---|---|
| Festkörpergehalt: | 40% |
| pH-Wert: | 8,60 |
| Viskosität (23°C): | 170 mPas |
| Mittlere Partikelgröße (LKS): | 148 nm |

### Beispiel 12

### (Vergleichsbeispiel I)

Es wurde gearbeitet wie in Beispiel 9 beschrieben, jedoch wurde anstelle der Verbindung aus Beispiel 1 Butanonoxim eingesetzt. Die erhaltene Dispersion besaß nachfolgende Eigenschaften:

| | |
|---|---|
| Festkörpergehalt: | 38 % |
| pH-Wert: | 8,5 |
| Viskosität (23°C): | 4000 mPas |
| Mittlere Partikelgröße (LKS): | 42 nm |

### Beispiel 13

### (Herstellung eines selbstvernetzenden Einkomponenten-Einbrennsystems)

Zu einem Gemisch aus 337,5 g (3,055 Val) Isophorondiisocyanat, 18,02 g (0,2 Mol) 1,4-Butandiol, 13,42 g (0,01 Mol) Trimethylolpropan, 22,5 g (0,045 Mol) Methanolethoxylats mittleren Molgewichts von 500 und 205,80 g (0,49 Val) eines Polyesters aus Adipinsäure und Hexandiol mittleren Molgewichts von 840 wurden bei 85°C 53,66 g (0,4 Mol) Dimethylolpropionsäure, gelöst in 106,80g N-Methylpyrrolidon, unter Rühren zugegeben und das Reaktionsgemisch 4 Stunden bei dieser Temperatur gerührt. Der NCO-Gehalt betrug dann 4,78% (theoret. 4,80 %). Innerhalb von 20 Minuten wurden 97,14 g (0,61 Val) Verbindung aus Beispiel 1 zugegeben. Anschließend wurden 318,18 g (1 Val) eines Polyesters aus Adipinsäure, Isophthalsäure, Trimethylolpropan, Neopentylglykol und Propylenglykol zugegeben und das Reaktionsgemisch 10 Stunden bei 85°C gerührt. Danach konnten IR-Spektroskopisch keine NCO-Gruppen mehr nachgewiesen werden. Anschließend wurden 35,57 g(0,4 Mol) Dimethylethanolamin zugegeben und 10 Minuten nachgerührt. Nach Zugabe von 1525,5 g 70°C warmem entionisiertem Wasser wurde 1 h bei 70°C dispergiert. Die erhaltenen weiße Dispersion besaß nachfolgende Eigenschaften:

| | |
|---|---|
| Festkörpergehalt: | 45 % |
| pH-Wert: | 8,35 |
| Viskosität (23°C): | 580 mPas |
| Mittlere Partikelgröße (LKS): | 40 nm |

### Beispiel 14

Es wurde wie in Beispiel 13 gearbeitet, jedoch wurde anstelle des Blockierungsmittels aus Beispiel 1 die gleiche molare Menge der Verbindung aus Beispiel 5 eingesetzt. Die erhaltene Dispersion besaß nachfolgende Eigenschaften:

| | |
|---|---|
| Festkörpergehalt: | 45 % |
| pH-Wert: | 8,12 |
| Viskosität (23°C): | 1800 mPas |
| Mittlere Partikelgröße (LKS): | 63 nm |

### Beispiel 15 (Vergleichsbeispiel):

Es wurde wie im Beispiel 13 beschrieben gearbeitet, jedoch wurde anstelle des erfindungsgemäßen Blockierungsmittels Butanonoxim eingesetzt. Die erhaltene Dispersion hatte nachfolgende Eigenschaften:

| | |
|---|---|
| Festkörpergehalt: | 40 % |
| pH-Wert: | 8,60 |
| Viskosität (23°C): | 3800 mPas |
| Mittlere Partikelgröße (LKS): | 51 nm |

### Beispiele (Anwendungsbeispiele):

Die nachfolgende Beispiele zeigen die Vorteile der erimdungsgemäßen blockierten Polyisocyanate gegenüber dem Stand der Technik.

Es wurden Klarlacke nachfolgender Zusammensetzung hergestellt. Aus den Klarlacken wurden Filme hergestellt, 10 Minuten bei Raumtemperatur getrocknet und anschließend 30 Minuten bei 140°C eingebrannt. Die erhaltenen Filme wurden anwendungstechnisch beurteilt. Die Ergebnisse sind in Tabelle 1 zusammengestellt.

**Tabelle 1 (NCO : OH = 1,0)**

| **Polyisocyanat aus Beispiel-Nr.** | **9** | **11a** | **12** | **13** | **14** | **15** |
|---|---|---|---|---|---|---|
| **Produkt (g)** | | | | | | |
| Bayhydrol^{®} PT 241 ¹⁾ | 20,1 | 20,1 | 20,1 | - | - | - |
| Bayhydrol^{®} VP LS 2290 | 54,9 | 54,9 | 54,9 | - | - | - |
| Additol^{®} XW 395 Lff | 1,3 | 1,3 | 1,3 | 1,3 | 1,3 | 1,3 |
| Surbynol^{®} 104, 50%ig in NMP | 1,3 | 1,3 | 1,3 | 1,3 | 1,3 | 1,3 |
| Dest. Wasser | 10,0 | 11,0 | 11,0 | 13,5 | 14,0 | 13,5 |
| Polyisocyanat | 101,8 | 102,5 | 82,3 | 164,5 | 164,5 | 164,5 |
| | | | | | | |
| Eigenschaft | | | | | | |
| Pendelhärte (s) | 163 | 122 | 103 | 118 | 98 | 82 |
| Anlösbarkeit (1 Min.) | 2234 | 2344 | 3344 | 3444 | 3444 | 4455 |

| | | | | | | |
|---|---|---|---|---|---|---|
| 1) Bayer AG, Leverkusen Lff: Lieferform | | | | | | |

## Patentansprüche

1. Blockierte Polyisocyanate der Formel (I) 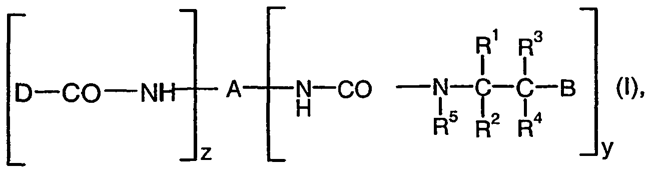 worin
A den Rest eines Polyisocyanats bedeutet,
B für 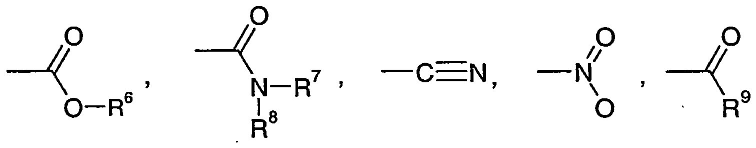 steht, wobei R⁶-R⁸ gleich oder verschieden sein können und unabhängig voneinander C₁-C₆-Alkyl und/oder C₁-C₆-Cycloalk.-y1 bedeuten, R⁹ Wasserstoff oder C₃-C₆-Alkyl oder C₃-C₆-Cycloalkyl bedeutet,
D den Rest eines kationischen, anionischen und/oder nichtionischen Hydrophilierungsmittels bedeutet,
R¹-R⁴ gleich oder verschieden sein können und unabhängig voneinander Wasserstoff, C₁-C₆-Alkyl oder C₃-C₆-Cycloalkyl bedeuten,
R⁵ C₁-C₁₀-Alkyl, C₃-C₁₀-Cycloalkyl bedeutet,
y eine Zahl von 1 bis 8 bedeutet und
z eine Zahl von 0,1 bis 4, bevorzugt 0,2 bis 2 bedeutet,
wobei das Verhältnis von y zu z 20:1 bis 1:1 , bevorzugt 10:3 bis 3:1, besonders bevorzugt 8:1 bis 4:1, beträgt.

2. Blockierte Polyisocyanate gemäß Anspruch 1, **dadurch gekennzeichnet, dass** R⁵ für einen Amyl-, Isopropyl-, Isobutyl- oder tert-Butylrest steht.

3. Blockierte Polyisocyanate gemäß Anspruch 1, **dadurch gekennzeichnet, dass** R¹ für einen Methylrest steht und R², R³, R⁴ für ein Wasserstoffatom stehen.

4. Blockierte Polyisocyanate gemäß Anspruch 1, **dadurch gekennzeichnet, dass** R³ für einen Methylrest steht und R¹, R², R⁴ für ein Wasserstoffatom stehen.

5. Blockierte Polyisocyanate gemäß Anspruch 1, **dadurch gekennzeichnet, dass** R¹, R², R³ und R⁴ für ein Wasserstoffatom stehen.

6. Blockierte Polyisocyanate gemäß Anspruch 1, **dadurch gekennzeichnet, dass** in einem Molekül sowohl blockierte Polyisocyanatgruppen wie auch freie Hydroxylgruppen vorliegen.

7. Beschichtungsformulierungen enthaltend blockierte Polyisocyanate gemäß Anspruch 1.

8. Beschichtungsformulierungen gemäß Anspruch 7, die zusätzlich mit Diisopropylamin, Butanonoxim und/oder Dimethylpyrazol blockierte Polyisocyanate enthalten .

9. Formulierungen gemäß Anspruch 8, **dadurch gekennzeichnet, dass** es sich um wässrige Dispersionen handelt.

10. Verfahren zur Herstellung von blockierten Polyisocyanaten der Formel (I) gemäß Anspruch 1, **dadurch gekennzeichnet, dass** Polyisocyanate der allgemeinen Formel (II) 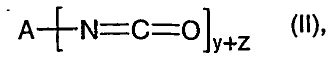 worin A, z und y die unter Formel I in Anspruch 1 angegebene Bedeutung haben, mit sekundären Aminen der allgemeinen Formel (III) 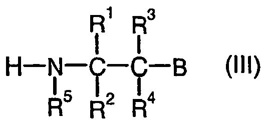 worin R¹- R⁵ und B die unter Formel (I) in Anspruch 1 genannte Bedeutung haben, und Hydrophilierungsmitteln D-H, wobei D die unter Formel (I) in Anspruch 1 genannte Bedeutung hat, umgesetzt werden.

11. Hydrophilierte, wässrige und/oder wasserverdünnbare Zusammensetzung enthaltend blockierte Polyisocyanate gemäß Anspruch 1 erhältlich durch Umsetzung von
a) 100 Äquivalent-% Polyisocyanat (II)
b) 40-90 Äquivalent-% Blockierungsmittel (III)
c) 10-40 Äquivalent-% Hydrophilierungsmittel D-H und gegebenenfalls
d) 0-40 Äquivalent-% einer bevorzugt difunktionellen Hydroxyl- und/oder Aminogruppen enthaltenden Verbindung eines mittleren Molgewichts von 62 bis 3000, bevorzugt 62-1500,
wobei die Mengenverhältnisse der Reaktionspartner so gewählt werden, dass das Äquivalentverhältnis von NCO-Gruppen der Komponente a) zu gegenüber Isocyanaten reaktionsfähigen Gruppen der Komponenten b), c) und d) bei 1:0,8 bis 1:1,2 liegt, sowie gegebenenfalls Zuschlagstoffe und Hilfsstoffe.

12. Verwendung der blockierten Polyisocyanate gemäß Anspruch 1 zur Herstellung von Lacken, Farben, Klebstoffen und Elastomeren.

13. Verwendung gemäß Anspruch 12, **dadurch gekennzeichnet, dass** es sich bei den Lacken, Farben, Klebstoffen oder Elastomeren um Einbrennsysteme zur Beschichtung von Substraten aus Holz, Metallen, mineralischen Stoffen, Betonprodukten, Textilien, Glas oder Kunststoffen handelt.

14. Verfahren zur Beschichtung von Substraten, **dadurch gekennzeichnet, dass** Beschichtungsformulierungen enthaltend blockierte Polyisocyanate gemäß Anspruch 1 auf ein Substrat aufgebracht werden und die Beschichtung anschließend bei Temperaturen von 90 bis 160°C bzw. Peak-Temperaturen von 130 bis 300 °C eingebrannt werden.

## Claims

1. Blocked polyisocyanates of the formula (I) 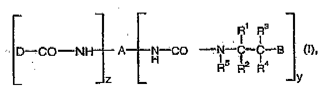 in which
A is the radical of a polyisocyanate,
B is 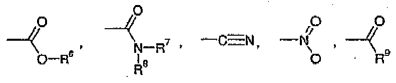 where R⁶-R⁸ may be identical or different and independently of one another are C₁-C₆-alkyl and/or C₁-C₆-cycloalkyl, and R⁹ is hydrogen or C₃-C₆-alkyl or C₃-C₆-cycloalkyl,
D is the radical of a cationic, anionic and/or nonionic hydrophilizing agent,
R¹-R⁴ may be identical or different and independently of one another are hydrogen, C₁-C₆-alkyl or C₃-C₆-cycloalkyl,
R⁵ is C₁-C₁₀-alkyl or C₃-C₁₀-cycloalkyl,
y is a number from 1 to 8 and
z is a number from 0.1 to 4, preferably 0.2 to 2,
the ratio of y to z being 20:1 to 1:1, preferably 10:3 to 3:1, more preferably 8:1 to 4:1.

2. Blocked polyisocyanates according to Claim 1, **characterized in that** R⁵ is an amyl, isopropyl, isobutyl or tert-butyl radical.

3. Blocked polyisocyanates according to Claim 1, **characterized in that** R¹ is a methyl radical and R², R³ and R⁴ are each a hydrogen atom.

4. Blocked polyisocyanates according to Claim 1, **characterized in that** R³ is a methyl radical and R¹, R² and R⁴ are each a hydrogen atom.

5. Blocked polyisocyanates according to Claim 1, **characterized in that** R¹, R², R³ and R⁴ are each a hydrogen atom.

6. Blocked polyisocyanates according to Claim 1, **characterized in that** in one molecule there are not only blocked Polyisocyanate groups but also free hydroxyl groups.

7. Coating formulations comprising blocked polyisocyanates according to Claim 1.

8. Coating formulations according to Claim 7, further comprising polyisocyanates blocked with diisopropylamine, butanone oxime and/or dimethylpyrazole.

9. Formulations according to Claim 8, **characterized in that** they are aqueous dispersions.

10. Process for preparing blocked polyisocyanates of the formula (I) according to Claim 1, **characterized in that** polyisocyanates of the general formula (II) 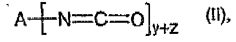 in which A, z and y have the definition, indicated under formula I in Claim 1,
are reacted with secondary amines of the general formula (III) 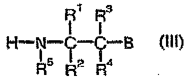 in which R¹-R⁵ and B have the definition stated under formula (I) in Claim 1, and with hydrophilizing agents D-H, where D has the definition stated under formula (I) in Claim 1.

11. Hydrophilized, aqueous and/or water-dilutable composition comprising blocked polyisocyanates according to Claim 1, obtainable by reacting
a) 100 equivalent of polyisocyanate (II),
b) 40-90 equivalent% of locking agent (III),
c) 10-40 equivalent% of hydrophilizing agents D-H and optionally
d) 0-40 equivalent% of a preferably difunctional compound containing hydroxyl groups and/or amino groups and having an average molar weight of 62 to 3000, preferably 62-1500,
the proportions of the reactants being selected such that the equivalents radio of NCO groups in component a) to isocyanate-reactive groups in components b), c) and d) is 1:0.8 to 1:1.2, and also, optionally, adjuvants and auxiliaries.

12. Use of the blocked polyisocyanates according to Claim 1 for producing varnishes, paints, adhesives and elastomers.

13. Use according to Claim 12, **characterized in that** the varnishes, paints, adhesives or elastomers are baking systems for the coating of substrates of wood, metals, minerals, concrete products, textiles, glass or plastics.

14. Method for coating substrates, **characterized in that** coating formulations comprising blocked polyisocyanates according to Claim 1 are applied to a substrate and the coatings are subsequently baked at temperatures of 90 to 160°C and/or peak temperatures of 130 to 300°C.

## Revendications

1. Polyisocyanates bloqués de formule (I) 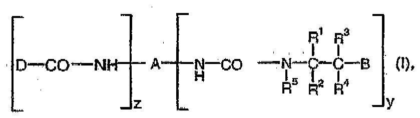 dans laquelle
A signifie le radical d'un Polyisocyanate,
B représente 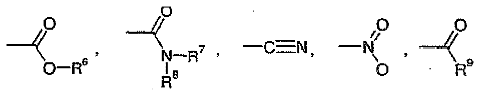
R⁶ à R⁸ pouvant être identiques ou différents, et signifiant indépendamment les uns des autres un alkyle en C₁-C₆ et/ou un cycloalkyle en C₁-C₆, R⁹ signifiant l'hydrogène ou un alkyle en C₃-C₆ ou un cycloalkyle en C₃-C₆,
D signifie le radical d'un agent d'hydrophilisation cationique, anionique et/ou non ionique,
R¹ à R⁴ peuvent être identiques ou différents, et signifient indépendamment les uns des autres l'hydrogène, un alkyle en C₁-C₆ ou un cycloalkyle en C₃-C₆,
R⁵ signifie un alkyle en C₁-C₁₀, cycloalkyle en C₃-C₁₀,
y signifie un nombre de 1 à 8 et
z signifie un nombre de 0,1 à 4, de préférence de 0,2 à 2,
le rapport entre y et z étant de 20:1 à 1:1, de préférence de 10:3 à 3:1, de manière particulièrement préférée de 8:1 à 4:1.

2. Polyisocyanates bloqués selon la revendication 1, **caractérisés en ce que** R⁵ représente un radical amyle, isopropyle, isobutyle ou tert-butyle.

3. Polyisocyanates bloqués selon la revendication 1, **caractérisées en ce que** R¹ représente un radical méthyle et R², R³, R⁴ représentent un atome d'hydrogène.

4. Polyisocyanats bloqués selon la revendication 1, **caractérisés en ce que** R³ représente un radical méthyle et R¹, R², R⁴ représentent un atome d'hydrogène.

5. Polyisocyanates bloqués selon la revendication 1, **caractérisés en ce que** R¹, R², R³ et R⁴ représentent un atome d'hydrogène.

6. Polyisocyanates bloqués selon la revendication 1, **caractérisés en ce qu'**aussi bien des groupes Polyisocyanate bloqués que des groupes hydroxyle libres sont présents dans une molécule.

7. Formulations de revêtement, contenant des polyisocyanates bloqués selon la revendication 1.

8. Formulations de revêtement selon la revendication 7, qui contiennent également des polyisocyanates bloqués avec de la diisopropylamine, du butanone-oxime et/ou du diméthylpyrazole.

9. Formulations selon la revendication 8, **caractérisées en ce qu'**il s'agit de dispersions aqueuses.

10. Procédé de fabrication de polyisocyanates bloqués de formule (I) selon la revendication 1, **caractérisé en ce que** des polyisocyanates de formule générale (II) 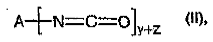 dans laquelle A, z et y ont la signification donnée pour la formule I dans la revendication 1,
sont mis en réaction avec des amines secondaires de formule générale (III) 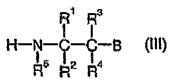 dans laquelle R¹ à R⁵ et B ont la signification donnée pour la formule (I) dans la revendication 1, et des agents d'hydrophilisation D-H, D ayant la signification donnée pour la formule (I) dans la revendication 1.

11. Composition hydrophilisée, aqueuse et/ou diluable avec de l'eau, contenant des polyisocyanates bloqués selon la revendication 1, pouvant être obtenus par mise en réaction de
a) 100 % équivalent de polyisocyanate (II)
b) 40 à 90 % équivalent d'agent bloquant (III)
c) 10 à 40 équivalent d'agent d'hydrophilisation D-H et éventuellement
d) 0 à 40 % équivalent d'un composé de préférence bifonctionnel contenant des groupes hydroxyle et/ou amino d'un poids moléculaire moyen de 62 à 3 000, de préférence de 62 à 1 500,
les proportions des partenaires de réfaction étant choisies de manière à ce que le rapport équivalent entre les groupes NCO du composant a) et les groupes réactifs avec les isocyanates des composants b), c) et d) soit de 1:0,8 à 1:1,2, ainsi qu'éventuellement des additifs et des adjuvants.

12. Utilisation des polyisocyanates bloqués selon la revendication 1 pour la fabrication de laques, de colorants, d'adhésifs et d'élastomères.

13. Utilisation selon la revendication 12, **caractérisée en ce que** les laques, colorants, adhésifs ou élastomères sont des systèmes à cuire pour le revêtement de substrats en bois, métaux, substances minérales, produits de béton, textiles, verre ou plastiques.

14. Procédé de revêtement de substrats, **caractérisé en ce que** des formulations de revêtement contenant des polyisocyanates bloqués selon la revendication 1 sont appliquées sur und substrat, puis les revêtements sont cuits à des températures de 90 à 160 °C ou à des températures pics de 130 à 300 °C.
